# EUROPÄISCHE PATENTSCHRIFT

(11) **EP 1 328 778 B1**
(45) Veröffentlichungstag und Bekanntmachung des Hinweises auf die Patenterteilung: **05.08.2009**
(21) Anmeldenummer: 01978150.9
(22) Anmeldetag: 18.09.2001
(51) Int. Cl.: G01F 1/66

(54) **ULTRASCHALL-DURCHFLUSSMESSER**
ULTRASONIC FLOW METER
DEBITMETRE A ULTRASONS

(30) Priorität: 25.09.2000 DE 10047383
(43) Veröffentlichungstag der Anmeldung: 23.07.2003
(73) Patentinhaber: Landis+Gyr GmbH, 90495 Nürnberg (DE)
(72) Erfinder: POLINSKI, Ewald, 91177 Thalmässing (DE)
(74) Vertreter: Bauerschmidt, Peter
(86) Internationale Anmeldenummer: PCT/DE2001/003590
(87) Internationale Veröffentlichungsnummer: WO 2002/025222

(56) Entgegenhaltungen:
- EP-A- 0 477 418
- EP-A- 0 708 313
- EP-A- 0 890 826
- WO-A-00/50852
- US-A- 3 890 423
- US-A- 4 763 513

## Beschreibung

Die Erfindung betrifft einen Ultraschall-Durchflussmesser gemäß dem Oberbegriff des Anspruchs 1.

Aus dem Aufsatz "Ultrasonic flowmeters", Trans. Inst. M.C. Vol. 4, No. 1 Jan-Mar 1982, S.2 bis 24, sind Ultraschall-Durchflussmesser verschiedenster Art bekannt, insbesondere auch solche gemäß dem Oberbegriff des Anspruchs 1. In FIG 14E auf Seite 10 ist eine Anordnung gezeigt, bei der längs eines Messrohres zwei zueinander beabstandete Flansche vorgesehen sind. In die Flansche sind schematisch gezeigte Umlenkspiegel eingeführt, die endseitig jeweils einen Ultraschallkopf (auch als Ultraschall-Wandler bezeichnet) tragen. Die Umlenkspiegel sind offenbar rohrartig ausgebildet, wobei sie flanschseitig einen Verschlussrand aufweisen, der den jeweiligen Flansch abdichtet.

Aus der EP 0 897 101 A1 ist ein Ultraschall-Durchflussmesser bekannt, bei dem die den jeweiligen Ultraschall-Wandlern gegenüber liegenden Umlenkspiegel an der jeweils gegenüber liegenden Gehäusewand des Messrohres gehaltert oder abgestützt sind. Dies ist eine aufwendige Konstruktion, da das Messrohr beidseitig bearbeitet werden muss. Außerdem ergibt sich dadurch eine strömungstechnisch ungünstige Formgebung innerhalb des Rohres.

Aus der US 4,610,167 sind Anordnungen bekannt, bei der die Umlenkspiegel ebenfalls an der den Ultraschallköpfen zugewandten Messrohrwänden angeordnet sind. In FIG 13 sind schematisch dargestellte Umlenkspiegel gezeigt, die offenbar mit einem Haltebügel innerhalb des Messrohres befestigt sind. Der Ultraschallkopf mit seinem Gehäuse bildet hierzu eine getrennte Baueinheit, die in den Flansch eingelassen ist. FIG 14 zeigt eine Anordnung, bei der eine rohrartige Ausgestaltung des Umlenkspiegels mit Befestigung zu erkennen ist. Inwieweit Umlenkspiegel und Ultraschallkopf getrennte oder eine gemeinsame Baueinheit bilden, ist nicht dargestellt.

In der US 3 890 423 A wird ein Ultraschall-Durchflussmesser beschrieben, der ein Gehäuse mit zwei Ultraschall-Wandlern und einer Spiegelvorrichtung umfasst, wobei die Spiegelvorrichtung auf gesonderten Stäben montiert ist.

Der Erfindung liegt die Aufgabe zugrunde, einen Ultraschall-Durchflussmesser anzugeben, bei dem eine einfache Ausgestaltung der Umlenkspiegel gegeben ist.

Die Lösung der Aufgabe gelingt erfindungsgemäß mit den Merkmalen des Anspruchs 1.

Auf diese Weise ist eine verblüffend einfache Befestigung der Umlenkspiegel und Ausgestaltung des Ultraschall-Durchflussmessers gegeben, wobei keine zusätzlichen Befestigungsmittel erforderlich sind. Die jeweiligen Bauteile halten und fixieren sich gegenseitig. Die Umlenkspiegel sind mit ihren Haltebügeln jeweils als einstückige Metallstanzteile ausgebildet. Somit ist eine besonders einfache Herstellung gegeben.

Bevorzugt sind die Umlenkspiegel mit ihren Haltebügeln in ihren jeweiligen Flanschen steckbar gehaltert. Somit ist eine besonders einfache Montage, gegebenenfalls auch eine automatisierte Wurfmontage, möglich.

Bevorzugt sind die Ultraschallköpfe in ihrem jeweiligen Flansch eingeschraubt, wobei die freien Enden der Haltebügel Halteköpfe aufweisen, die im Bereich der jeweiligen Flansche in zugeordneten Kopföffnungen gehaltert sind. Ein Justieren der Spiegel entfällt somit. Auch ist ein Verstellen der Umlenkspiegel bei der Montage vermieden. Mit dem Einschrauben der Ultraschallköpfe sind die Umlenkspiegel fest in ihrer Einbauposition fixiert. Alternativ ist auch eine Steckbefestigung oder eine Bajonettverschraubung möglich.

Bevorzugt weisen die Umlenkspiegel jeweils zwei sich gegenüber liegende Haltebügel auf, die an gegenüberliegenden Seiten eines jeweiligen Spiegelelements angreifen. Somit sind die Unlenkspiegel beidseitig sicher und stabil geführt, so dass im Betrieb kein Verbiegen oder Verstellen möglich ist. Um einfachsten Fall kann auch ein seitlich angreifender Haltebügel ausreichen.

Zusätzlich kann ein Temperatursensor mit einer Verarbeitungseinrichtung vorgesehen sein, wobei aus einer erfassten Temperatur und einer erfassten Durchflussmenge eine Wärmemenge errechnet wird. Somit ist der Ultraschall-Durchflussmesser auch für eine Wärmemengenmessung geeignet.

Mit Vorteil sind Messrohr, Umlenkspiegel und die dem Medium zugewendeten Flächen der Ultraschallköpfe aus Metall gefertigt. Somit ist eine sogenannte "Einstofflösung" gegeben, so dass eine Korrosion oder sonstige korrosionsfördernde chemische Effekte vermieden sind. Für die Umlenkspiegel kommt dabei bevorzugt eine Metalllegierung umfassend Kupfer und Nickel zum Einsatz. Diese Legierung eignet sich besonders, da die Umlenkspiegel als Metallstanzteil ausgebildet sind und gebogen werden müssen. Messrohr und die dem Medium zugewendeten Flächen der Ultraschallköpfe, insbesondere deren Gehäuse, sind bevorzugt aus einer Messinglegierung gefertigt.

Weiterer Vorteil der "Ganzmetalllösung" ist, dass der Durchflussmesser gegenüber einer Metall-Kunststoff Ausführung für höhere Betriebs- oder Mediumtemperaturen geeignet ist. Auch beim Entsorgen des kompletten Messrohrs ist die Ganzmetallausführung vorteilhaft.

Ein Ausführungsbeispiel der Erfindung, weitere Vorteile und Details werden nachfolgend anhand der Zeichnung beispielhaft näher erläutert. Es zeigen:
- FIG 1: einen Ultraschall-Durchflussmesser mit eingesetzten Ultraschallköpfen und Umlenkspiegeln im Längsschnitt,
- FIG 2: den Ultraschall-Durchflussmesser gemäß FIG 1 ohne Ultraschallköpfe in einer Draufsicht,
- FIG 3 und 4: einen Umlenkspiegel in zwei Ansichten und
- FIG 5: ein Metallstanzteil für einen Umlenkspiegel.

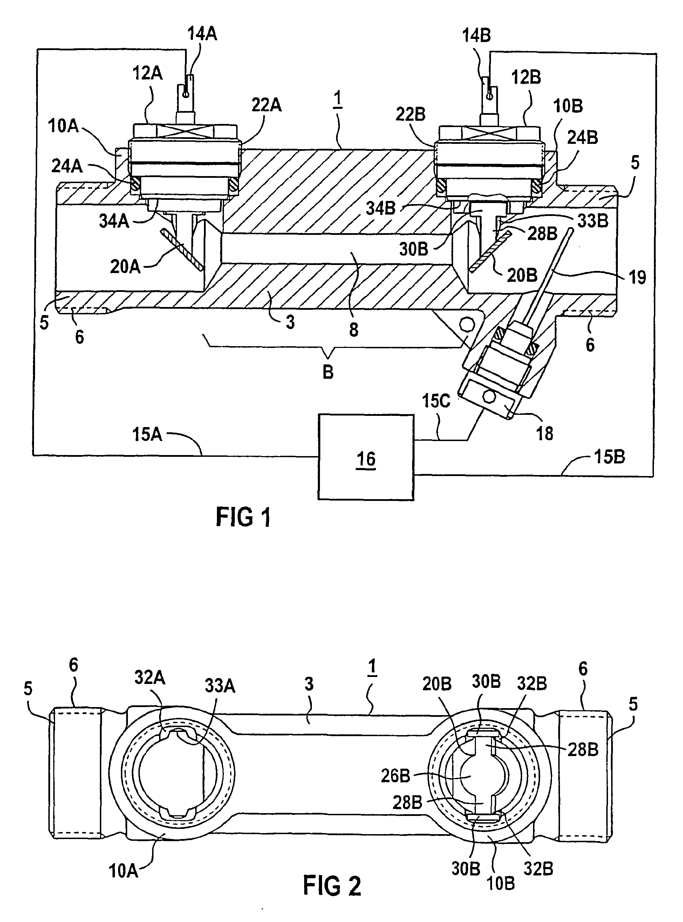

FIG 1 zeigt einen Ultraschall-Durchflussmesser 1, der z.B. als Wasser- oder Wärmemengenzähler in Haushalten Verwendung findet. Prinzipiell sind auch industrielle Verwendungen, z.B. zur Durchflussmessung von sonstigen flüssigen oder gasförmigen Medien, insbesondere chemische Flüssigkeiten oder Gase, möglich.

Der Ultraschall-Durchflussmesser 1 wird nachfolgend mit Durchflussmesser 1 bezeichnet. Der Durchflussmesser 1 umfasst zunächst ein Messrohr 3, das in eine nicht näher gezeigte Leitung einer Versorgungsanlage, z.B. einer Hauswasserversorgung, zwischengeschaltet wird. Er weist dazu endseitige Anschlussflansche 5 auf, die außenseitig mit Gewinden 6 versehen sind. Das Messrohr 3 weist innenseitig über den Bereich B eine Verengung seines Innenquerschnitts auf. Dieser von dem Medium zu durchströmende Bereich ist als Messstrecke 8 bezeichnet.

An den Enden der Messstrecke 8 sind in der nicht näher bezeichneten Außenwand des Messrohres 3 zueinander beabstandete Flansche 10A und 10B angeordnet, in denen jeweils ein zugehöriger Ultraschallkopf 12A und 12B angeordnet ist. Die Ultraschallköpfe 12A und 12B können allgemein nach dem Stand der Technik ausgestaltet sein. Bevorzugt sind die Ultraschallköpfe 12A und 12B als sogenannte Topfwandler mit einem Metallgehäuse, insbesondere aus Messingwerkstoff, ausgeführt. Derartige Ultraschallköpfe (auch Schallsensoren genannt) sind beispielsweise aus der EP 0 679 874 und der DE 197 05 321.10 bekannt.

Die Ultraschallköpfe 12A und 12B sind in ihren jeweiligen Flanschen 10A bzw. 10B bevorzugt mittels Gewinde 22A und 22B eingeschraubt. Zur zusätzlichen Abdichtung gegenüber dem Innenraum des Messrohres 1 kann ein Dichtring 24A bzw. 24B vorgesehen sein. Die nachfolgenden Ausführungen gelten für beide Ultraschallköpfe mit ihren jeweiligen Flanschen und Umlenkspiegeln sinngemäß

Die Flansche 10A und 10B mit den dazugehörigen Ultraschallköpfen 12A bzw. 12B sind derart am Messrohr 1 befestigt, dass die Ultraschallköpfe 12A und 12B senkrecht zum durchfließenden Medium in das Innere des Messrohres 1 hineinschallen. Selbstverständlich sind die Ultraschallköpfe 12A und 12B über ihre jeweiligen Anschlussfahnen 14A und 14B und Leitungen 15A, 15B mit einer Verarbeitungseinrichtung 16 verbunden. Die Verarbeitungseinrichtung 16 dient dabei - wie allgemein aus dem Stand der Technik bekannt - zum Ansteuern der Ultraschallköpfe 12A, 12B und zum Auswerten ihrer Empfangssignale.

Beim Einsatz des Durchflussmessers 1 als Wärmemengenzähler kann zusätzlich auch ein Temperatursensor 18 vorgesehen sein, der ebenfalls mit der Verarbeitungseinrichtung 16 über eine Leitung 15C verbunden ist und mit seinem Fühlerende 19 in das Messrohr 3 und somit in den Mediumstrom hineinragt.

Zur Messung der Durchflussmenge wird, wie aus dem Stand der Technik allgemein bekannt, das Ultraschallsignal von einem der Ultraschallköpfe zum anderen und umgekehrt gesendet. Aus dem Laufzeitunterschied der Signale - mit und gegen den Mediumstrom - wird in der Verarbeitungseinrichtung 16 die Fließgeschwindigkeit ermittelt. Unter Berücksichtigung des Querschnitts der Messstrecke 8 kann dann rechnerisch die Durchflussmenge ermittelt werden.

Um das Ultraschallsignal von den Ultraschallköpfen 12A, 12B längs durch die Messstrecke 8 zu führen, wird es über Umlenkspiegel 20A und 20B umgelenkt. Die vorliegende Idee beschäftigt sich im wesentlichen mit der einfachen Ausgestaltung dieser Umlenkspiegel 20A, 20B.

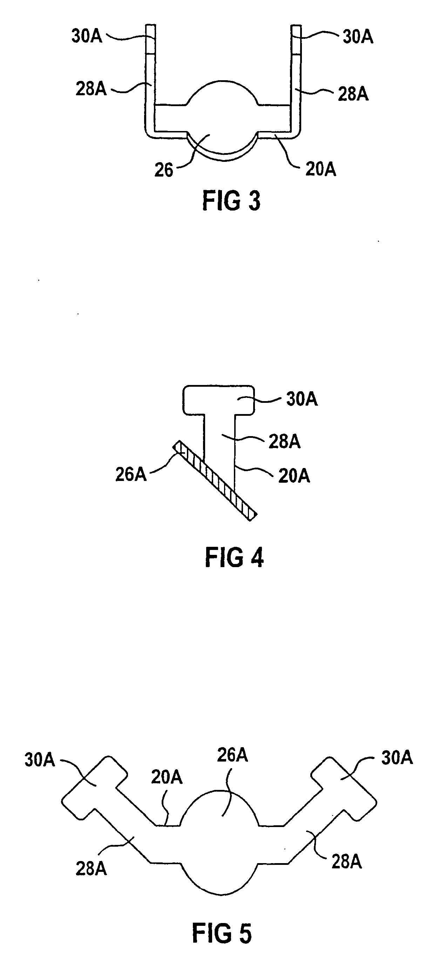

Anhand der FIG 3 bis 5 wird zunächst ein Umlenkspiegel näher erläutert. Der Umlenkspiegel 20A umfasst im wesentlichen ein mittiges Spiegelelement 26 und sich gegenüberliegende, seitlich am Spiegelelement 26 angeordnete Haltebügel 28 auf. Die Haltebügel 28 weisen jeweils endseitig einen Haltekopf 30 auf, der z.B. Wege zeigt, hammerartig ausgebildet sein kann. Selbstverständlich sind auch andere Formgebungen, z.B. eine runde Kreisform, möglich. In einer vereinfachten Ausführung ist auch eine Variante mit nur einem seitlichen Haltebügel möglich. Das Spiegelelement 26 an sich dient zum Umlenken des Ultraschallsignals.

Der Umlenkspiegel 20A ist als einstückiges Metallstanzteil ausgebildet. FIG 5 zeigt einen Umlenkspiegel 20A im flachen Urzustand ohne abgewinkelte Haltebügel 28 als flaches Stanzteil. Wesentlich dabei ist, dass durch das Abwinkeln - der Einbaurichtung der Ultraschallköpfe 12A, 12B im Messrohr 1 angepasst - eine präzise Umlenkung des Ultraschallsignals erfolgt. Bei der bevorzugten senkrechten Einbaurichtung der Ultraschallköpfe 12A, 12B ergibt sich demnach eine Spiegelausrichtung unter einem Winkel von 45° bezogen zur Einschallrichtung oder zur Durchflussrichtung des Mediums.

Bevorzugt kommt als Material für die Umlenkspiegel 20A, 20B eine Metalllegierung umfassend Kupfer und Nickel zur Anwendung. Einerseits muss die Legierung stanz- und biegefähig sein. Anderseits soll die Legierung auch den Anforderungen bezüglich Korrosionsbeständigkeit und Verträglichkeit mit den Materialien des Messrohres 3 und der Ultraschallköpfe 12A, 12B genügen. Für das Material der Gehäuse der Ultraschallköpfe 12A, 12B und für das Messrohr 3 kommen bevorzugt Messinglegierungen zur Anwendung. Weiterhin muss das Material der Spiegelelemente auch eine gewisse Härte aufweisen, so dass eine gute Schallumlenkung stattfindet.

Alternativ oder zusätzlich ist es auch denkbar, dass ein derartiger Umlenkspiegel 10A, 20B im Bereich der Halteköpfe 30 angeformte Elemente, z.B. Kunststofffüße aufweist, so dass eine günstige Befestigung gegeben ist.

Ein wesentlicher Punkt oder Gedanke des vorliegenden Umlenkspiegels ist, dass dieser auf einfache Weise im Messrohr mit Hilfe des zugeordneten Ultraschallkopfes befestigt werden kann. Die FIG 2 zeigt das Messrohr 3 in einer Draufsicht, wobei lediglich der Flansch 10B mit seinem Umlenkspiegel 20B versehen ist. Ergänzend hierzu ist in FIG 1 der Umlenkspiegel 20B im Längsschnitt gezeigt. Der Schallkopf 12B ist dabei im Bereich des Haltekopfes 30B aufgerissen dargestellt.

Am Flansch 10A ist in FIG 2 zu erkennen, dass innenseitig zur Aufnahme der Haltebügel der jeweiligen Umlenkspiegel erste Ausnehmungen 32A und zweite Ausnehmungen 32B vorgesehen sind. Diese Ausnehmungen sind entsprechend der Formgebung der Haltebügel 28 ausgestaltet, wobei eine formschlüssige Einpassung des Haltekopfes 30 in der ersten Ausnehmung 32A gegeben sein soll. Die Anordnung der Ausnehmungen, die im übrigen als Bohrungen oder Ausfräsungen im Material des Messrohres 3 ausgeführt werden können, sind derart, dass die Umlenkspiegel 20A, 20B einfach von außen eingelegt werden können, wobei sie automatisch durch die Führung an den Ausnehmungen 32A, 32B in einer vorgegebenen Position ausgerichtet werden.

Diese Position ist in der Darstellung am Flansch 12B von FIG 1 und 2 gut zu erkennen. Der Umlenkspiegel 20B liegt mit seinem Haltebügel 28B und dem endseitigen Haltekopf 30B formschlüssig in den Ausnehmungen 32B und 33B. Zur endgültigen Fixierung des Haltebügels 28B dient auf einfache Weise der Ultraschallkopf 12B, der in den Flansch 10B eingeschraubt wird. Der Ultraschallkopf 12B drückt dabei mit seiner Stirnkante 34B auf den Haltekopf 30B des Umlenkspiegels 20B und fixiert diesen somit fest in den zugeordneten Ausnehmungen 32B und 33B. Gegebenenfalls kann je nach Art der Fixierung auch eine Verquetschung des Haltekopfes 30B erfolgen, wobei hierbei keine Verstellung des Spiegelelements 26B erfolgen darf.

Selbstverständlich kann auch eine alternative Befestigung der Ultraschallköpfe 12A, 12B, z.B. durch ein Bajonettverschluss oder eine Verklebung, vorgesehen sein. Wesentlich für den vorliegenden Gedanken ist, dass mit möglichst einer Ganzmetallausführung im Mediumbereich eine einfache Herstellbarkeit des Durchflussmessers oder -zählers gegeben ist. Die Montage umfasst hier im wesentlichen nur die Schritte a) Einlegen des Umlenkspiegels und b) Fixieren des Umlenkspiegels durch Montage des Ultraschallkopfes. Zusätzliche Befestigungsmöglichkeiten oder gesonderte Haltemittel für die Umlenkspiegel sind somit nicht nötig und vermieden. Die Mechanik des Durchflussmessers 1 ist somit auf ein Minimum reduziert.

## Patentansprüche

1. Ultraschall-Durchflussmesser (1) mit
- einem Messrohr (3), durch welches ein Medium durchführbar ist und an welchem längs zueinander beabstandete Ultraschallköpfe (12A, 12B) an Flanschen (10A, 10B) angeordnet sind,
- wobei zur Führung eines Ultraschallsignals von einem Ultraschallkopf (12A, 12B) zum anderen jeweils ein Umlenkspiegel (20A, 20B) im Bereich der jeweiligen Ultraschallköpfe (12A, 12B) innerhalb des Messrohres (3) angeordnet sind,
**dadurch gekennzeichnet, dass** die Umlenkspiegel (20A, 20B) mit an ihnen jeweils zumindest einem angeformten und abgewinkelten Haltebügel (28A, 28B) einstückig als Metallstanzteile ausgebildet sind und wobei das jeweils freie Ende eines jeden Haltebügels (28A, 28B) mittels des jeweiligen Ultraschallkopfes (12A, 12B) im oder am Flansch (10A, 10B) fixiert ist.

2. Ultraschall-Durchflussmesser nach Anspruch 1, **dadurch gekennzeichnet, dass** die Umlenkspiegel (20A, 20B) mit ihren Haltebügeln (28A, 28B) in ihren jeweiligen Flanschen (10A, 10B) steckbar gehaltert sind.

3. Ultraschall-Durchflussmesser nach Anspruch 1 oder 2, **dadurch gekennzeichnet, dass** die Ultraschallköpfe (12A, 12B) in ihrem jeweiligen Flansch (10A, 10B) eingeschraubt sind, und die freien Enden der Haltebügel (28A, 28B) Halteköpfe (30A, 30B) aufweisen, die im Bereich der jeweiligen Flansche (10A, 10B) in zugeordneten ersten Ausnehmungen (32A, 32B) gehaltert sind.

4. Ultraschall-Durchflussmesser nach einem der Ansprüche 1 bis 3, **dadurch gekennzeichnet, dass** die Umlenkspiegel (20A, 20B) jeweils ein Spiegelelement (26A, 26B) und jeweils zwei sich gegenüberliegende Haltebügel (28A, 28B) aufweisen, die an gegenüberliegenden Seiten eines jeweiligen Spiegelelements (26A, 26B) angreifen.

5. Ultraschall-Durchflussmesser nach einem der Ansprüche 1 bis 4, **dadurch gekennzeichnet, dass** ein Temperatursensor (18) und eine Verarbeitungseinrichtung (16) vorgesehen sind, und wobei aus einer erfassten Temperatur und einer erfassten Durchflussmenge eine Wärmemenge errechnet ist.

6. Ultraschall-Durchflussmesser nach einem der Ansprüche 1 bis 5, **dadurch gekennzeichnet, dass** Messrohr (3), Umlenkspiegel (20A, 20B) und zumindest die dem Medium zugewendeten Flächen der Ultraschallköpfe (12A, 12B) aus Metall gefertigt sind.

7. Ultraschall-Durchflussmesser nach Anspruch 6, **dadurch gekennzeichnet, dass** die Umlenkspiegel (20A, 20B) aus einer Metalllegierung umfassend Kupfer und Nickel sind.

8. Ultraschall-Durchflussmesser nach Anspruch 6 oder 7, **dadurch gekennzeichnet, dass** Messrohr (3) und die dem Medium zugewandten Flächen der Ultraschallköpfe (12A, 12B) aus einer Messinglegierung gefertigt sind.

## Claims

1. Ultrasonic flow meter (1) comprising
- a measuring tube (3) through which a medium is passable and on which ultrasonic probes (12A, 12B) are arranged on flanges (10A, 10B), the ultrasonic probes (12A, 12B) being longitudinally spaced from each other,
- with in each case one deflection mirror (20A, 20B) being arranged inside the measuring tube (3) in the region of the respective ultrasonic probes (12A, 12B) for guiding an ultrasonic signal from one ultrasonic probe (12A, 12B) to the other,
**characterised in that** the deflection mirrors (20A, 20B) are formed in one piece, in the form of metal stampings, with at least one angled retaining bracket (28A, 28B) formed thereon, with the respective free end of each retaining bracket (28A, 28B) being secured in or on the flange (10A, 10B9) by means of the respective ultrasonic probe (12A, 12B).

2. Ultrasonic flow meter according to claim 1, **characterised in that** the deflection mirrors (20A, 20B) are insertably mounted in their respective flanges (10A, 10B) by means of their retaining brackets (28A, 28B).

3. Ultrasonic flow meter according to claim 1 or 2, **characterised in that** the ultrasonic probes (12A, 12B) are screwed into their respective flange (10A, 10B), and the free ends of the retaining brackets (28A, 28B) comprise retaining heads (30A, 30B) which are mounted in associated first recesses (32A, 32B) in the region of the respective flanges (10A, 10B).

4. Ultrasonic flow meter according to one of claims 1 to 3, **characterised in that** the deflection mirrors (20A, 20B) comprise in each case one mirror element (26A, 26B) and in each case two retaining brackets (28A, 28B) which are arranged opposite each other and engage with opposite sides of a respective mirror element (26A, 26B).

5. Ultrasonic flow meter according to one of claims 1 to 4, **characterised in that** a temperature sensor (18) and a processing device (16) are provided, with an amount of heat being calculated from a detected temperature and a detected flow rate.

6. Ultrasonic flow meter according to one of claims 1 to 5, **characterised in that** measuring tube (3), deflection mirrors (20A, 20B) and at least the surfaces of the ultrasonic probes (12A, 12B) facing the medium are made of metal.

7. Ultrasonic flow meter according to claim 6, **characterised in that** the deflection mirrors (20A, 20B) consist of a metal alloy comprising copper and nickel.

8. Ultrasonic flow meter according to claim 6 or 7, **characterised in that** measuring tube (3) and the surfaces of the ultrasonic probes (12A, 12B) facing the medium are made of a brass alloy.

## Revendications

1. Débitmètre à ultrasons (1) comportant
- un tube de mesure (3) pouvant être traversé par un milieu et au niveau duquel des têtes à ultrasons (12A, 12B) espacées longitudinalement les unes des autres sont disposées au niveau de brides (10A, 10B),
- respectivement un miroir de déviation (20A, 20B) étant disposé à l'intérieur du tube de mesure (3) au niveau des têtes à ultrasons (12A, 12B) respectives pour conduire un signal ultrasonique d'une tête à ultrasons (12A, 12B) à l'autre,
**caractérisé en ce que** les miroirs de déviation (20A, 20B) avec au moins un étrier de retenue (28A, 28B) rapporté et coudé au niveau de ceux-ci sont réalisés d'un seul tenant sous forme de pièces métalliques découpées et dans lequel l'extrémité respectivement libre de chaque étrier de retenue (28A, 28B) est fixée dans ou au niveau de la bride (10A, 10B) au moyen de la tête à ultrasons (12A, 12B) respective.

2. Débitmètre à ultrasons selon la revendication 1, **caractérisé en ce que** les miroirs de déviation (20A, 20B) sont maintenus avec leurs étriers de retenue (28A, 28B) de manière enfichable dans leurs brides (10A, 10B) respectives.

3. Débitmètre à ultrasons selon la revendication 1 ou 2, **caractérisé en ce que** les têtes à ultrasons (12A, 12B) sont vissées dans leur bride (10A, 10B) respective et les extrémités libres des étriers de retenue (28A, 28B) présentent des têtes de retenue (30A, 30B), qui sont maintenues au niveau de la bride (10A, 10B) respective dans de premiers évidements (32A, 32B) associés.

4. Débitmètre à ultrasons selon l'une quelconque des revendications 1 à 3, **caractérisé en ce que** les miroirs de déviation (20A, 20B) présentent respectivement un élément miroir (26A, 26B) et respectivement deux étriers de retenue (28A, 28B) se faisant face, qui agissent sur des côtés opposés d'un élément miroir (26A, 26B) respectif.

5. Débitmètre à ultrasons selon l'une quelconque des revendications 1 à 4, **caractérisé en ce qu'**un capteur de température (18) et un dispositif de traitement (16) sont prévus, et dans lequel une quantité de chaleur est calculée à partir d'une température détectée et d'un débit détecté.

6. Débitmètre à ultrasons selon l'une quelconque des revendications 1 à 5, **caractérisé en ce que** le tube de mesure (3), les miroirs de déviation (20A, 20B) et au moins les surfaces des têtes à ultrasons (12A, 12B) tournées vers le milieu sont en métal.

7. Débitmètre à ultrasons selon la revendication 6, **caractérisé en ce que** les miroirs de déviation (20A, 20B) sont en un alliage métallique constitué de cuivre et de nickel.

8. Débitmètre à ultrasons selon la revendication 6 ou 7, **caractérisé en ce que** le tube de mesure (3) et les surfaces des têtes à ultrasons (12A, 12B) tournées vers le milieu sont en un alliage de laiton.
